# EUROPEAN PATENT APPLICATION

(11) **EP 1 890 020 A1**
(43) Date of publication of application: **20.02.2008**
(21) Application number: 05784024.1
(22) Date of filing: 07.09.2005
(51) Int. Cl.: F02B 53/02

(54) **ROTARY ENGINE**

(30) Priority: 31.05.2005 CN 200510072363
(71) Applicant: Pang, Lejun, Shanxi 711700 (CN)
(72) Inventor: Pang, Lejun, Shanxi 711700 (CN)
(74) Representative: Janson, Ronny
(86) International application number: PCT/CN2005/001418
(87) International publication number: WO 2006/128331

(57) **Abstract**

The invention discloses a rotary internal combustion engine. The engine includes a cylinder block with circular section, which consists of two identical cylinder blocks with semi-circular sections. Two identical rotors are installed within the cylinder block. The rotors are provided with four pistons with piston rings similar to the reciprocation engine. Two identical rotor shafts are vertically fixed on the two rotors respectively. Two non-circular gears are installed on the two rotor shafts separately, which engage with two eccentric gears respectively attached to one output shaft respectively. Thus the rotors do work four times every revolution. The engine has no valve mechanism, and may include multi spark plugs or injectors, multi intake ports and multi exhaust ports. The engine can increase the differential speed by changing gear sets, in order to enhance the working performance. The engine can also combine multi cylinder blocks to provide larger output power.

## Description

### Technical Field

The present invention relates to an internal combustion engine, and particularly to a rotary internal combustion engine.

### Background Art

Prior two-stroke reciprocation internal combustion engines have disadvantages of large fuel consumption, low thermal efficiency and great pollution. A four-stroke internal combustion engine have intake and exhaust valve systems which are complicated and consume a large amount of power. In such a four-stroke internal combustion engine, pistons, piston rings and cylinders are always in a friction state on the side, such that the cylinders will lose their roundness and the friction is increased, with an increased power loss and an increased difficulty in sealing. Sizes and numbers of the intake and exhaust valves, as well as the numbers of the spark plugs and fuel injectors, are limited due to the area of the top potion of a combustion chamber, thus the improvement on performance of the engine is limited. At the same time, the complicated reciprocating movement of the crankshaft connecting rod mechanism and the pistons consumes a large amount of power, and the dynamic load of individual loaded members and the wearing of the bears are increased due to the inertia of the complicated movement. Additionally, the vibration of the engine is increased, greatly influencing the increasing of the rotating speed. The mechanical power loss is up to 74%-80% (see "constitution of mechanical loss", on page 38, section 1, chapter 2 of the book titled "Technologies for Improving the Performance of an Internal Combustion Engine"). A prior rotary polygonal piston engine can not achieve the effect of the reciprocation engine due to the difficulty of machining, problems of seal flakes (corresponding to piston rings of a reciprocation engine) and lubricating thereof and problems of fuel consumption and exhaust emission (see "rotary polygonal piston engine", 3.3.2, on page 171, book titled "Principles and Constructions of Special Type Engines"). A conventional instantaneous volume-variable angle difference type rotary internal combustion engine (Patent Application No. 00123952.x and Publication No. CN1349038A) has a problem in sealing between the two rotors installed crossing each other and between the bodies, which is difficult to solve and has a mechanism of two sets of non-circular gears and thumb wheel, which has a limited theory output power or can not do work.

### Contents of the Invention

The object of the present invention is to provide a rotary internal combustion engine by modifying the cylinder-piston mechanism, valve mechanism and crankshaft connecting rod mechanism of the prior reciprocation internal combustion engine.

The rotary internal combustion engine of the present invention comprises a fuel supply system, a lubricating system, an ignition or fuel injection system, a cylinder-piston system and so on, and is characterized in comprising an annular cylinder block with a circular section, which consists of two identical cylinder blocks 2 and 12 with a semi-circular section; two rotors 4 and 5 are installed within the cylinder block; four pistons 3 are fixed to both ends of the rotors 4 and 5 respectively; two rotor shafts 6 and 7 are vertically fixed on the two rotors 4 and 5 respectively; two non-circular gears 8 and 9 are installed on the two rotor shafts 6 and 7 respectively, and engage with two eccentric gears 10 and 11, respectively, which are attached to the same power output shaft 13 in opposite directions so as to constitute two gear pairs; and a spark plug or injector 25, an intake port 20 and an exhaust port 21 are provided in required positions.

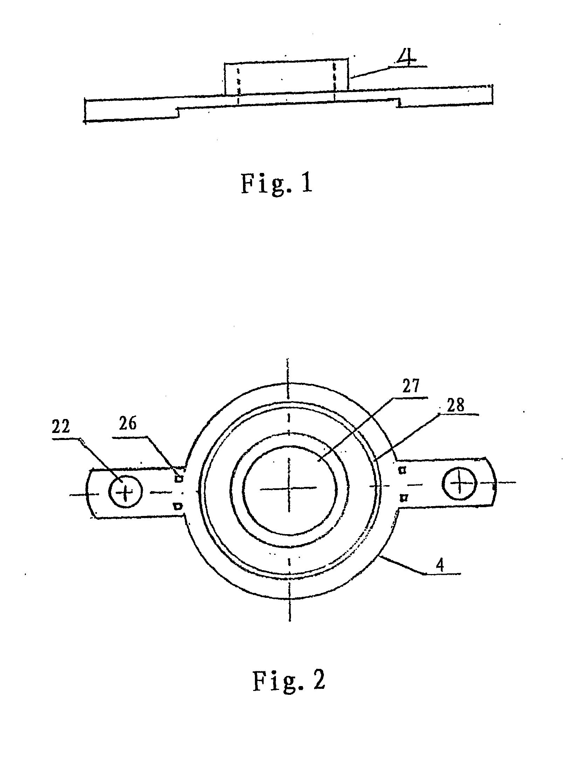

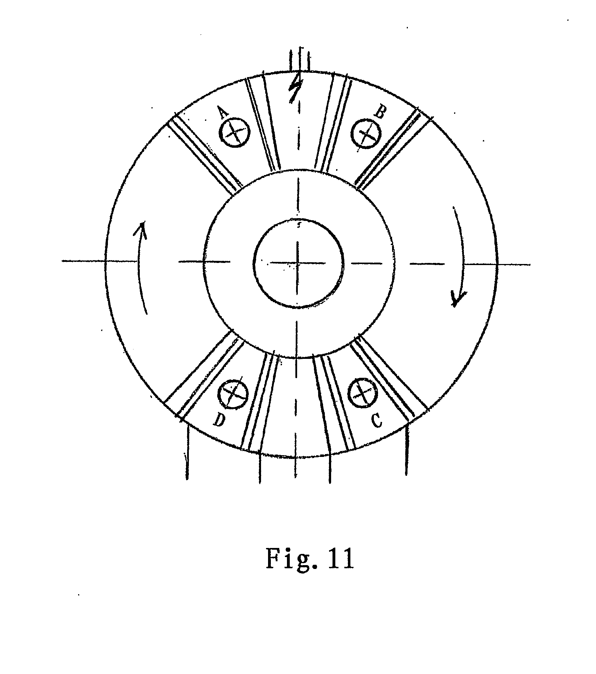

Comparing with the prior art, the present rotary internal combustion engine has the following advantages:
(1) The present structure has no dedicated valve system, so a certain amount of power can be saved.
(2) The rotors do work four times every revolution, which equals to the amount of work done by a 8-cylinder four-stroke reciprocation internal combustion engine every revolution of the crankshaft. That is, the work done by one annular cylinder block of the present structure is equal to that of a 8-cylinder four-stroke reciprocation internal combustion engine.
(3) Having no complicated and bulky crankshaft connecting rod mechanism and valve system, the rotary internal combustion engine has a more simple structure, less components, a smaller volume, a lighter weight, a higher performance per liter and a smaller weight-power ratio; comparing with a 8-cylinder four-stroke reciprocation engine with the same cylinder bore, the number of components in the characterized portion of the rotary internal combustion engine is decreased by more than 60%, and the weight and volume are reduced by more than 40%, resulting in a much simpler process and a much lower cost in manufacture.
(4) The present rotary engine has no vibration due to the disadvantageous inertia of reciprocating movements of the crankshaft connecting rod mechanism, valve system and pistons; the inertia brought by the engine is well used; good balancing can be achieved at any rotating speed, making it possible to significantly increase the rotating speed.
(5) There is no friction between the piston and the cylinder body of the present rotary internal combustion engine, and the friction phenomenon of the piston and piston rings with the side of the cylinder body is avoided; the friction loss will not increase due to the side wear and tear, and the sealing will not be difficult due to the losing of roundness of the cylinder body caused by side friction; and the joint having one or two piston rings of the piston is disposed inside the piston ring joint place 26 in the end of the rotor, as shown in figure 2, so as to resolve the problem of leakage at the joints of piston rings.
(6) Each piston of the present rotary internal combustion engine can carry out two strokes for doing work at the same time, namely, expansion stroke and exhaust stroke; and the intake stroke and compression stroke are carried out simultaneously by the same piston, as shown in figures 11-13. Consequently, the friction between the piston rings and the cylinder body is reduced by 50%, saving a large amount of power.
(7) More intake and exhaust ports can be provided in the intake and exhaust position of the present structure. The total area of the intake or exhaust ports can be larger than the area of the cylinder bore, such that the pumping loss is greatly reduced. The intake charging amount is increased. The exhaust gas can be discharged more quickly and more completely. The power is saved.
(8) Since there is no air valve in the intake port of the present structure, the intake port can be easily designed into a shape, which facilitates the formation of whirlpool of the combustion of the mixture gas, such that the mixture gas can be combusted more quickly and more completely.
(9) More spark plugs or fuel injectors can be provided in the present structure, such that the flame diffusing distance is shortened and the combustion is fastened, and it facilitates to apply the lean-burn technology and the quick-burn technology.
(10) The intake and compression strokes are always carried out always in a special potion of the cylinder block, which is not heated by the combustion gas. Therefore, the fresh air intaken has a large density and a low temperature, facilitating to increase the compression ratio and the combustion efficiency.
(11) There is no disadvantageous phenomenon caused by carbon deposition in the combustion chamber, because no special combustion chamber is provided in the present structure.

### Description of Figures

Figure 1 is a side view of the rotor;
Figure 2 is a plan view of figure 1;
Figure 3 is a side view of figure 4;
Figure 4 is a side view of a piston;
Figure 5 is a plan view of figure 4;
Figure 6 is a plan view of an annular cylinder block;

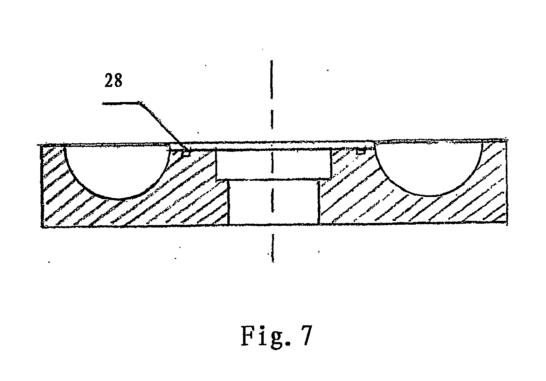

Figure 7 is a section view taken along the line E-E in figure 6;
Figure 8 is a schematic assembly plan view of non-circular gears and eccentric gears and the cylinder block;
Figure 9 is section view of general assembly taken along the line M-M in figure 8;
Figure 10 is a schematic assembly view of the piston, non-circular gears and eccentric gears, with the cylinder block partly removed;
Figure 11-13 are schematic views showing the pistons performing strokes in the cylinder block.

### Mode of Carrying Out the Invention

The mode of carrying out the invention will be described in detail with reference to the drawings.

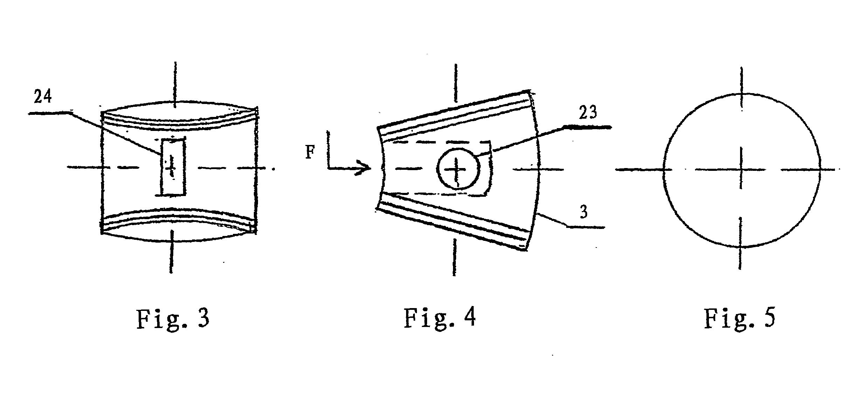

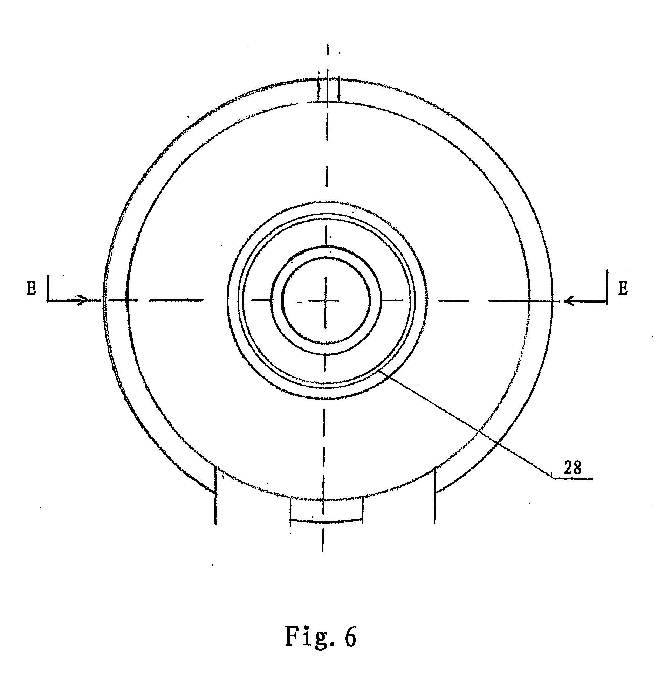

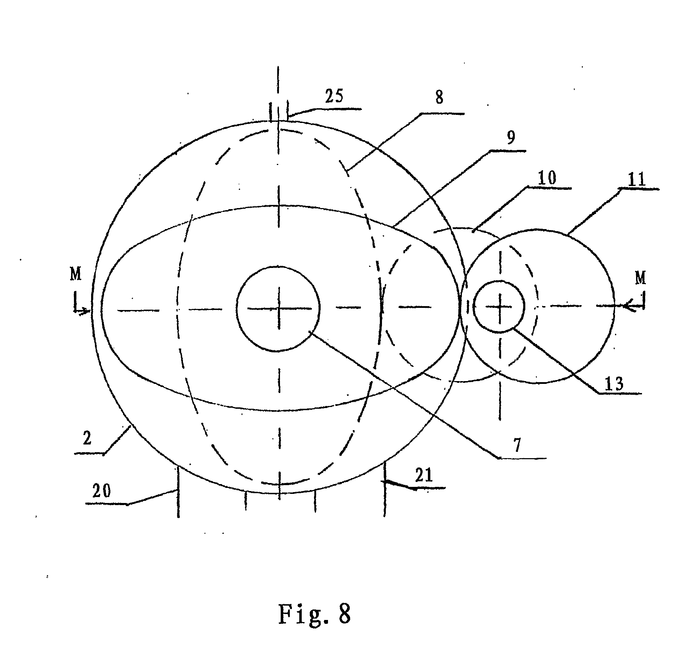

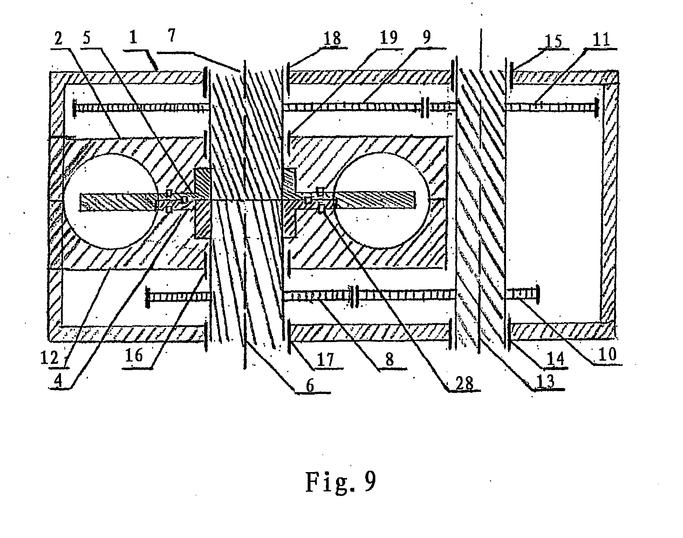

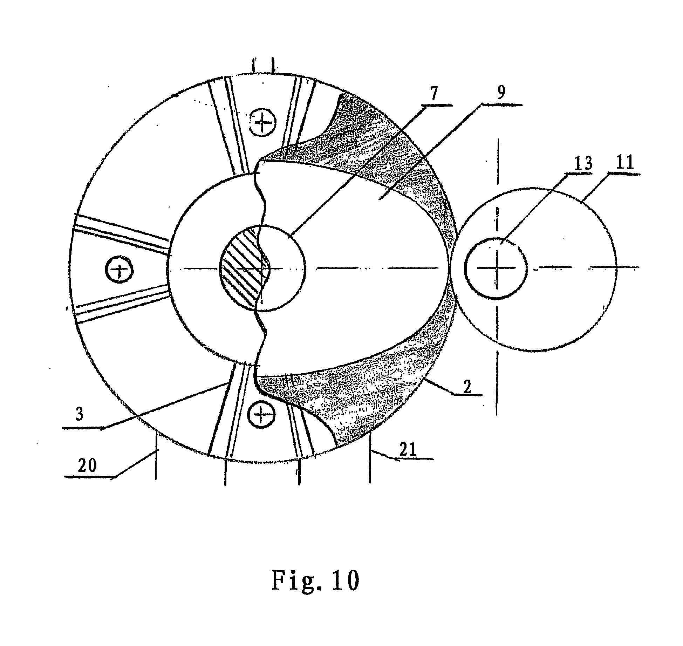

An annular cylinder block with a circular section consists of two identical cylinder blocks 2 and 12 (as shown in figure 6) with semi-circular sections. Two identical rotors 4 and 5 are installed within the cylinder block, as shown in figure 2. Grooves 28 for seal rings are provided on both sides of the rotors 4 and 5 and on a corresponding portion of the cylinder block, and seal rings (not shown) are provided in the grooves. Four identical pistons 3 are fixed to both ends of the rotors 4 and 5 respectively. The piston has a hole 24 which is mounted to an end of the rotor and has a piston pin hole 23 which is concentric with a piston pin hole 22 in the end of the rotor. The piston is fixed to the end of the rotor by the same piston pin or bolt as that of the reciprocation engine and the four pistons are mounted on the same level. One or more piston rings (not shown) that is the same as those of the reciprocation engine are mounted on the piston. A ring joint with one or two rings therein may be disposed inside a place 26 of a piston ring joint in the end of the rotor. The upper and lower faces of the piston are both solid. The lubrication between the piston rings and the cylinder block and the two rotors can be performed by rotor shaft and rotor in a forced pressure discontinuous lubrication manner, namely, the pressure is not supplied when the piston passing the intake and exhaust ports. The piston can be formed into a sector shape, as shown in figure 4, or into other shapes. The rotor and the piston can be an integral single member. Two rotor shafts 6 and 7 are vertically fixed in shaft holes 27 of the two rotors 4 and 5 respectively. Two identical non-circular gears 8 and 9 are installed on the two rotor shafts 6 and 7 respectively, as shown in figure 8 or 9. The non-circular gears 8 and 9 are mounted and are oriented such that the major axes are parallel with the pistons on both ends of the rotors 4 and 5 respectively, as shown in figure 10. Further, an power output shaft 13 is provided, on which two identical eccentric gears 10 and 11 are mounted and are oriented in opposite directions, as shown in figure 8 or 9. The two eccentric gears 10 and 11 are balanced with the prior art. Two gear pairs are formed by the eccentric gears 10, 11 and the non-circular gears 8, 9, which are engaged with each other respectively, as shown in figure 8 or 10. The circumference of the non-circular gear is twice as long as that of the eccentric gear. Two bears 14 and 15 are mounted on the power output shaft 13. Four bears 16, 17, 18 and 19 fixed to the engine body are mounted on the rotor shafts 6 and 7 respectively, as shown in figure 9. A spark plug or fuel injector 25 is provided at a location on the cylinder block where the rotation angle difference between the two pistons is minimum, namely, at a center location when the volume between the two pistons is minimum. An intake port 20 and an exhaust port 21 are provided in the location corresponding to the spark plug 25, as shown in figure 8. In addition, a fuel supply system, lubrication system, cooling system and ignition system are provided, which are substantially same as those of the prior reciprocation internal combustion engine.

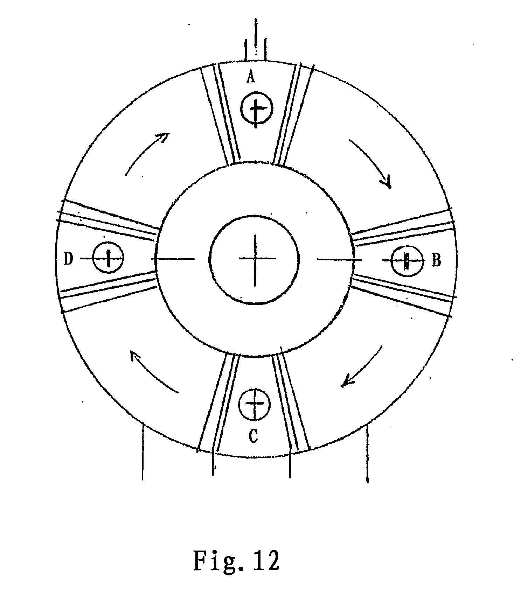

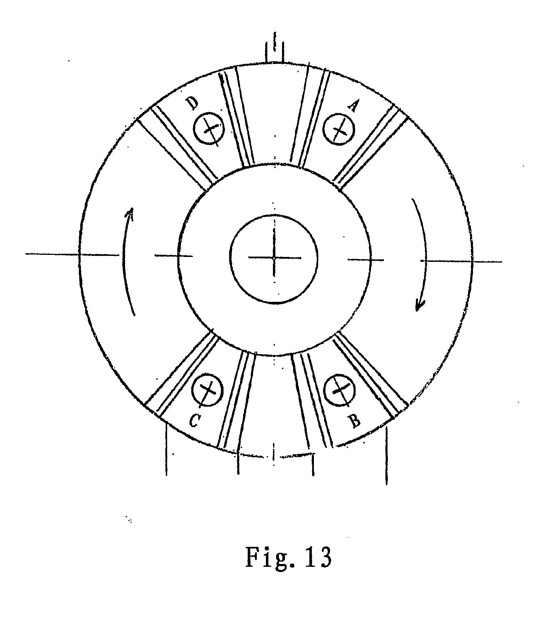

The operating principle of the present structure is as follow: the volume between the pistons are varied by means of the rotating speed difference between the two rotors under the effect of rotation angle difference between the two groups of non-circular gear and eccentric gear, so as to successively carry out a series of working processes of intaking, compression, expansion and exhaust strokes. The processes are shown in figure 11, in which the combustible gas between the pistons A and B has been compressed and the ignition is started and the expansion stroke is started. At that time, the pistons B and D on the same rotor rotate clockwise and accelerate and power is outputted via the output shaft by the rotor shafts, non-circular gears and eccentric gears. The pistons A and C on the same rotor rotate and decelerate and at the same time the volume between the pistons A and D is in a compression stroke, the volume between the pistons D and C is in an intake stroke, and the volume between the pistons B and C is in an exhaust stroke. When the pistons reach the position shown in figure 12, the pistons A and C are slowest, the pistons B and D are the fastest, and the speed difference between the two rotors is maximum. At this time, the pistons A and C begin to accelerate, and the pistons B and D begin to decelerate. When the pistons reach the position shown in figure 13, an expansion stroke is completed between the pistons A and B, a compression stroke is completed between the pistons A and D, an intaking stroke is completed between the pistons D and C, and an exhaust stroke is completed between the pistons B and C. Accordingly, the exhaust, intaking, compression and expansion strokes are completed once simultaneously between every two of the pistons respectively. Thus, when the piston complete every revolution, as shown in figure 11, when the piston A rotates back to the same position, four working strokes are completed, which corresponds to the cycle of each revolution of the crank shaft in a 8-cylinder four-stroke reciprocation internal combustion engine.

The better performance can be achieved with the larger speed difference between the pistons within an allowable range. The speed difference between the pistons is determined by the design of the eccentric gears and the non-circular gears. Also, the speed difference can be increased by changing and adding the groups of the non-circular gears and the eccentric gears, for improving the performance. A plurality of groups of cylinder blocks with matching transmission shafts and gears can be combined to provide a larger power output. Two or more intake/exhaust ports can be provided in the present structure to reduce the pumping loss and increase the intake charging. Two or more spark plugs or fuel injectors can be provided to make the combustion more quickly and more completely.

Exemplary descriptions of the present invention have been made. It should be understood that, any variations, modifications or equivalents are within the protective scope of the present invention, without departing from the spirit and the scope defined by the accompanying claims.

## Claims

1. A rotary internal combustion engine, comprising a fuel supply system, a cooling system, a lubricating system, an ignition system, a cylinder-piston system and so on, which is **characterized in that**, it includes an annular cylinder block with a circular section, which consists of two identical cylinder blocks (2, 12) with a semi-circular section; two rotors (4, 5) are installed within the cylinder block; four pistons (3) are fixed to both ends of the rotors (4, 5) respectively; two rotor shafts (6, 7) are vertically fixed on the two rotors (4, 5) respectively; two non-circular gears (8, 9) are installed on the two rotor shafts (6, 7) respectively, and engage with two eccentric gears, respectively, attached to the same power output shaft (13) in opposite directions, so as to constitute two gear pairs; and a spark plug or injector (25), and an intake port (20) and an exhaust port (21) are provided in required positions.

2. The rotary internal combustion engine of claim 1, **characterized in that**, said piston (3) and rotor (4) can be formed in an integral single member.

3. The rotary internal combustion engine of claim 1 or 2, **characterized in that**, two or more spark plugs or fuel injectors are provided.

4. The rotary internal combustion engine of any one of claims 1-3, **characterized in that**, two or more intake and exhaust ports are provided.

5. The rotary internal combustion engine of any one of claims 1-4, **characterized in that**, a joint having one or two piston rings of said piston is disposed inside a piston ring joint place (26) in the end of the rotor.

6. The rotary internal combustion engine of any one of claims 1-5, **characterized in that**, an operating performance of the internal combustion engine is improved by changing and adding groups of the non-circular gears and the eccentric gears.

7. The rotary internal combustion engine of any one of claims 1-6, **characterized in that**, it includes a plurality of groups of cylinder block and matching transmission shafts and gears such that the engine can output a larger power.
